# EUROPÄISCHE PATENTSCHRIFT

(11) **EP 1 073 706 B1**
(45) Veröffentlichungstag und Bekanntmachung des Hinweises auf die Patenterteilung: **17.09.2003**
(21) Anmeldenummer: 99920649.3
(22) Anmeldetag: 13.04.1999
(51) Int. Cl.: C11D 17/00, C11D 3/20, C11D 3/37, B01J 2/00

(54) **UMHÜLLTE REINIGUNGSMITTELKOMPONENTE**
COATED DETERGENT COMPONENTS
CONSTITUANTS DETERSIFS ENROBES

(30) Priorität: 22.04.1998 DE 19817964
(43) Veröffentlichungstag der Anmeldung: 07.02.2001
(73) Patentinhaber: Henkel Kommanditgesellschaft auf Aktien, 40191 Düsseldorf (DE)
(72) Erfinder: GASSENMEIER, Thomas, D-40229 Düsseldorf (DE); MILLHOFF, Jürgen, D-40211 Düsseldorf (DE); HÄRER, Jürgen, D-40593 Düsseldorf (DE); NITSCH, Christian, D-40591 Düsseldorf (DE)
(86) Internationale Anmeldenummer: EP9902466
(87) Internationale Veröffentlichungsnummer: WO99054431

(56) Entgegenhaltungen:
- EP-A- 0 346 034
- EP-A- 0 382 464
- WO-A-94/26860
- DE-A- 19 727 073
- GB-A- 1 523 957
- US-A- 5 498 378

## Beschreibung

Die vorliegende Erfindung betrifft ein Verfahren zur Herstellung einer umhüllten Reinigungsmittelkomponente, wobei die Umhüllung aus einem nicht wasserlöslichen Stoff besteht, der einen plastischen Erstarrungsbereich aufweist und der zu umhüllende Stoff bei der Erweichungstemperatur des Umhüllungsmittels flüssig ist. Weiterhin betrifft die Erfindung solche umhüllten Reinigungsmittelkomponenten sowie ihre Verwendung in Reinigungsmitteln, insbesondere in Waschmitteln, Reinigungsmitteln für harte Oberflächen, maschinellen Geschirrspülmitteln oder Handgeschirrspülmitteln.

Moderne Reinigungsmittel enthalten eine Vielzahl von Komponenten, die jeweils spezifische, entweder den Reinigungsvorgang unterstützende Wirkungen aufweisen oder andere Aufgaben (beispielsweise Geruchsverbesserung) wahrnehmen. Neben den üblicherweise in Reinigungsmitteln vorliegenden anionischen, nichtionischen und/oder kationischen Tensiden können beispielsweise Enzyme, Bleichmittel, Bleichaktivatoren, Duftstoffe und/oder weitere Zusatzstoffe enthalten sein.

Reinigungsmittel werden in der Regel verdünnt angewendet, d.h., der eigentliche Reinigungsvorgang wird mit Hilfe einer verdünnten wäßrigen Lösung des Reinigungsmittels (Reinigungsflotte) durchgeführt. In der Regel weist die Reinigungsflotte eine erhöhte Temperatur auf, in Abhängigkeit vom Einsatzgebiet des Reinigungsmittels liegt die Temperaturspanne üblicherweise in einem Bereich von 40°C bis etwa 95°C.

Reinigungsflotten mit niedrigen Temperaturen findet man üblicherweise dort, wo der Anwender in manuellen Kontakt mit der Reinigungsflotte tritt (Handgeschirrspülmittel, Putzmittel). Höhere Temperaturen findet man beispielsweise überall dort, wo der Reinigungsvorgang maschinell durchgeführt wird (maschinelle Geschirrspülmittel, Waschmittel).

Während die Vielzahl der im Reinigungsmittel vorliegenden Komponenten in der Regel eine gute Reinigungskraft des Mittels bei unterschiedlichen Temperaturen und verschiedensten Anschmutzungen gewährleistet, kommt es jedoch häufig zu Kompatibilitätsproblemen zwischen einzelnen Komponenten. So wird beispielsweise die Aktivität von Enzymen, die zum Beispiel zum Ablösen von proteinhaltigen Anschmutzungen in Reinigungsmitteln enthalten sind, durch gleichzeitig aktiviertes Bleichmittel gemindert. Deshalb müssen entweder dem Reinigungsmittel mehr Enzyme zugesetzt werden um eine hohe Reinigungskraft zu erhalten, oder das Reinigungsmittel zeigt eine schlechtere Reinigungswirkung als nach der Menge des eingesetzten Enzyms eigentlich zu erwarten gewesen wäre.

Unter Umständen kann auch die Empfindlichkeit einzelner Komponenten äußeren Einflüssen gegenüber, beispielsweise gegenüber Luftfeuchtigkeit, problematisch sein. So können beispielsweise Bleichmittel wie Percarbonate durch Feuchtigkeit, thermische Einflüsse und Wechselwirkungen mit anderen Komponenten des im Reinigungsmittel vorliegenden Stoffgemischs abgebaut werden, was zu einem Verlust an Bleichwirkung führt.

Ist im Reinigungsmittel ein Bleichmittel enthalten (was in der Regel zumindest bei einigen Waschmitteln und insbesondere bei maschinellen Geschirrspülmitteln der Fall ist), liegt zusätzlich in der Regel ein sogenannter Bleichaktivator vor, der eine Freisetzung des Bleichmittels (des Aktivsauerstoffs) schon bei geringen Temperaturen bewirkt. Liegen Bleichmittel und Aktivator im Reinigungsmittel nebeneinander vor, so kann es bei Einfluß von Feuchtigkeit schon während der Lagerung zu einer Zersetzung des Bleichmittels kommen, was wiederum zu einem Verlust an Bleichaktivität für das Reinigungsmittel führt.

Eine besonders kritische Situation für das Zusammenspiel verschiedener im Reinigungsmittel enthaltener Substanzen besteht dann, wenn es sich bei dem Reinigungsmittel um ein flüssig formuliertes Reinigungsmittel handelt, das in der Regel zumindest geringe Anteile an Wasser enthält. Hier treten die bei pulverförmigen Reinigungsmitteln oder bei granulierten Reinigungsmitteln beobachtbaren, im wesentlichen durch Luftfeuchtigkeit hervorgerufenen Einflüsse durch den Wassergehalt des flüssig formulierten Reinigungsmittels im verstärkten Maße auf. Solche Wechselwirkungen sind üblicherweise nicht erwünscht.

Es ist bei herkömmlichen Reinigungsmitteln, insbesondere bei solchen die bei hoher Temperatur eingesetzt werden (maschinelle Reinigungsmittel wie beispielsweise maschinelle Geschirrspülmittel oder Waschmittel) die Regel, daß manche Reinigungsmittelkomponenten ihre Wirksamkeit hauptsächlich in niedrigeren Temperaturbereichen entfalten (beispielsweise Enzyme) oder durch bestimmte aggressive Inhaltsstoffe, beispielsweise Bleichmittel oder Waschalkalien, in ihrer Wirksamkeit beeinträchtigt werden. Neben den schon genannten Enzymen zählen beispielsweise auch Duftstoffe zu dieser Gruppe. Auch in diesem Fall erweist es sich als Nachteil, daß bestimmte Reinigungsmittelkomponenten zusammen mit anderen Reinigungsmittelkomponenten gleichzeitig ihre Aktivität entfalten, was zu einer gegenseitigen Wirksamkeitsverminderung und schlimmstenfalls zur völligen Blockade des Wirkmechanismus einzelner Komponenten führen kann

Um die genannten Nachteile auszuschließen oder zumindest in ihrer Auswirkung abzuschwächen, ist daher eine Zubereitungsform für ein Reinigungsmittel ideal, welche bestimmte Stoffe (beispielsweise aggressive Stoffe oder empfindliche Stoffe) für eine bestimmte Zeit in einer Form zurückhält, die gegenüber den schon gelösten Bestandteilen der Waschmittelflotte indifferent ist und welche die Stoffe erst zu einem späteren Zeitpunkt, beispielsweise wenn die Reinigungsfunktion der bereits gelösten Komponenten beendet ist, freisetzt. Idealerweise sollte die Freisetzung dann jedoch rasch und quantitativ verlaufen, um einen möglichst hohen Anteil des Wirkstoffes, vorzugsweise den gesamten Wirkstoff, zu nutzen. Als geeigneter Parameter zur Auslösung dieser Freisetzung bietet sich beispielsweise die Temperatur der Reinigungsflotte an.

Es hat in der Vergangenheit nicht an Versuchen gefehlt, einzelne Reinigungsmittelkomponenten gegenüber äußeren Einflüssen durch verschiedene Verfahren zu isolieren.

Die **DE-A 41 29 242** beschreibt ein lagerstabil verkapseltes Natriumpercarbonat und ein Verfahren zu seiner Herstellung. Dabei soll wasserfreies, festes Natriumpercarbonat mit einem hydrophobierenden Schutzmantel eines bei Raumtemperatur festen Beschichtungsmaterials umhüllt werden. Die Umhüllung selbst geschieht dadurch, daß das feinteilige Natriumpercarbonat durch eine Sprühnebelzone des geschmolzenen Beschichtungsmittels geschleudert wird. Im Anschluß an den Kontakt mit dem geschmolzenen Überzugsmaterial wird das frisch überzogene Gut durch einen Kühlgasstrom aufgenommen, der zu einer sofortigen Erstarrung der Umhüllung führt.

Die **EP-A 0 131 269** betrifft Metallchelatkomplexe enthaltende Granulate und Verfahren zu ihrer Herstellung. Es wird ein Verfahren zur Umhüllung von Metallchelatkomplexen der Ethylendiamintetraessigsäure (H₄EDTA) beschrieben, bei dem die pulverisierten Metallchelatkomplexe mit der Schmelze der Umhüllung gemischt und homogenisiert werden. Die flüssige Dispersion wird anschließend in einer Pastillieranlage oder in einer Verschuppungsanlage zu relativ großen Pastillen oder Schuppen weiterverarbeitet. Ebenfalls erwähnt wird eine Verarbeitung des schmelzflüssigen Gemischs aus Bindemittel und Metallchelatkomplex in Strang- und Lochpressen oder in Extrudern. Die so erhältlichen Produkte werden dahingehend beschrieben, daß sie sich in Wasser langsamer als die reinen Metallchelatkomplexe auflösen. Es wird von einer Verzögerungswirkung gesprochen, der Einfluß der Umgebungstemperatur wird in der Druckschrift nicht erwähnt.

Die **US-A 5,258,132** beschreibt Partikel, die mit einem einlagigen Überzug aus Paraffinwachs mit einem Schmelzpunkt von etwa 40 bis 50°C versehen sind. Die Herstellung der überzogenen Partikel erfolgt durch Sprühbeschichtung, bei der ein Fließbett mit festen Partikeln entweder von oben oder von unten mit dem geschmolzenen Paraffinwachs behandelt wird.

Die **WO 95/30735** betrifft ebenfalls feste, mit einem bei Raumtemperatur festen Überzug umhüllte Partikel, deren Überzug aus einem Polyvinylether/Paraffinwachs-Gemisch besteht. Der Auftrag des Überzugs erfolgt durch Sprühauftrag im Fließbett.

Die ältere deutsche Patentanmeldung **DE 197 27 073** schließlich offenbart ein verbessertes Verfahren zur Herstellung umhüllter Feststoffpartikel, bei dem die Feststoffpartikel in der Schmelze eines bei Raumtemperatur festen, weitgehend wasserunlöslichen Stoffes (Umhüllung), der einen plastischen Erstarrungsbereich aufweist, dispergiert werden, die Dispersion abgekühlt, und bei einer Temperatur, die im plastischen Erstarrungsbereich der Umhüllung liegt, granuliert wird, wobei die Feststoffpartikel eine Teilchengröße von mindestens 0,05 mm, insbesondere mindestens 0,1 mm, aufweisen.

Die aus dem Stand der Technik bekannten Verfahren eignen sich zur Umhüllung von festen, in der Regel wasserlöslichen oder zumindest wasserdispergierbaren Partikeln mit bei Raumtemperatur festen Umhüllungsmitteln. Die oben genannten Substanzklassen, bei denen eine Beschichtung wünschenswert sein kann, beinhalten jedoch auch Vertreter, die bei der Erweichungstemperatur des Umhüllungsmittels in flüssiger Form vorliegen. Solche Stoffe lassen sich nach den im Stand der Technik beschriebenen Verfahren nicht oder nur unzureichend umhüllen. Desweiteren kann es wünschenswert sein, auch bei Raumtemperatur flüssige oder fließfähige Stoffe, insbesondere Tenside, durch eine Umhüllung vor frühzeitiger Auflösung zu schützen. Die genannten Stoffe sind zumeist hydrophil und lösen sich deshalb in der Schmelze der meist hydrophoben Umhüllungsmittel in der Regel nicht auf.

Bei der Umhüllung der genannten Stoffe tritt eine Vielzahl von Problemen auf. Werden diese Stoffe in die Schmelze des Umhüllungsmittels eingetragen, so bilden sie eine flüssige Phase, die sich in der flüssigen Phase des Umhüllungsmittels nicht löst. Bei Abkühlung solcher Gemische erhält man eine nahezu vollständige Phasentrennung und erreicht keine Einbettung der Substanz. Problematisch ist dieses Phänomen auch, wenn man versucht, feste Stoffe zu umhüllen, auf denen andere Stoffe der genannten Art aufgetragen sind. Solche im Waschund Reinigungsmittelsektor weit verbreiteten "Compounds" bestehen aus einem festen Trägermaterial und einer Aktivsubstanz, beispielsweise Tensid, Schauminhibitor oder Parfüm. Werden solche Compounds einem Umhüllungsverfahren des Standes der Technik unterworfen, wird zwar das ursprüngliche Trägermaterial umhüllt, die Aktivsubstanz, die sich nicht im Umhüllungsmittel löst, bildet aber wiederum eine getrennte Phase, so daß die gewünschte Umhüllung aktivsubstanzhaltiger Feststoffpartikel nicht möglich ist, wenn die Aktivsubstanz bei der Erweichungstemperatur des Umhüllungsmaterials flüssig ist.
Die verbreitete Methode der Sprühbeschichtung mit einem in Lösungsmittel gelösten Umhüllungsmaterial, die bei den Stoffen angewendet werden kann, die zwar bei der Erweichungstemperatur des Umhüllungsmittels flüssig, bei Raumtemperatur aber fest sind, ergibt zwar außerordentlich feinteilige umhüllte Partikel, in der Regel ist die Umhüllung jedoch nicht völlig dicht, so daß bereits beim Eintrag in Wasser Wirksubstanz freigesetzt wird. In der Regel werden bei der Sprühbeschichtung Ecken und Kanten des üblicherweise unregelmäßig geformten, festen Substrats nur unvollständig von der Umhüllung bedeckt. Dies führt beim Eintrag in Wasser in der Regel dazu, daß schnell relativ viel der umhüllten Wirksubstanz in das umgebende Wasser austreten kann und der gewünschte Effekt damit gar nicht, oder nur in abgeschwächter Form eintritt.

Aufgabe der Erfindung war es daher ein Verfahren zu finden, durch das sich auch solche Reinigungsmittelkomponenten mit einer nicht wasserlöslichen Umhüllung überziehen lassen, die bei der Erweichungstemperatur des Umhüllungsmittels flüssig sind bzw. die solche bei der Erweichungstemperatur des Umhüllungsmittels flüssigen Substanzen enthalten. Durch die Umhüllung soll gewährleistet werden, daß in wäßriger Umgebung die umhüllte, in der Regel wasserlösliche oder zumindest wasserdispergierbare Komponente unterhalb einer bestimmten Temperatur nur sehr langsam oder nur bis zu einem bestimmten Prozentsatz freigegeben wird. Im Idealfall erfolgt unterhalb einer bestimmten Temperatur überhaupt keine Freisetzung. Weiterhin war es Aufgabe der Erfindung ein Verfahren zur Herstellung einer umhüllten Reinigungsmittelkomponente zur Verfügung zu stellen, bei dem die umhüllte Reinigungsmittelkomponente in wäßriger Umgebung bei Erhöhung der Wassertemperatur auf einen Wert oberhalb der Untergrenze des Schmelzbereichs der Umhüllung den Inhalt möglichst rasch und möglichst vollständig freigibt.

Es wurde nun gefunden, daß das Verfahren der Schmelzeinbettung auch für Stoffe und Stoffgemische angewendet werden kann, die bei der Erweichungstemperatur des Umhüllungsmittel flüssig sind bzw. solche Stoffe enthalten, wenn ganz bestimmte Emulgatoren zur Schmelze des Umhülllungsmittels gegeben werden. Überraschenderweise wurde festgestellt, daß sich umhüllte Feststoffpartikel bilden und das Problem der Phasentrennung gelöst werden kann, wobei nur bestimmte Emulgatoren einsetzbar sind.

Gegenstand der Erfindung ist daher ein Verfahren zur Herstellung umhüllter Feststoffpartikel, bei dem die zu umhüllenden Stoffe in der Schmelze eines bei Raumtemperatur festen, weitgehend wasserunlöslichen Stoffes (Umhüllung), der einen plastischen Erstarrungsbereich aufweist, dispergiert werden, die Dispersion abgekühlt, und gegebenenfalls weiterverarbeitet wird, wobei die zu umhüllenden Stoffe bei der Erweichungstemperatur des Umhüllungsmittels flüssig sind und der Schmelze ein oder mehrere Emulgatoren aus der Gruppe der Fettalkohole, Fettsäuren, Polyglycerinester und der Polyoxyalkylensiloxane zugegeben werden.

An die Umhüllung der Feststoffpartikel werden verschiedene Anforderungen gestellt, die zum einen das Schmelz- beziehungsweise Erstarrungsverhalten, zum anderen jedoch auch die Materialeigenschaften der Umhüllung im erstarrten Bereich bei Umgebungstemperatur betreffen. Da die Umhüllung die darin eingeschlossenen Feststoffpartikel bei Transport oder Lagerung dauerhaft gegen Umgebungseinflüsse schützen soll, muß sie eine hohe Stabilität gegenüber beispielsweise bei Transport oder Umfüllvorgängen auftretenden Stoßbelastungen, insbesondere Zusammenstößen mit anderen Partikeln oder Gefäßwänden, aufweisen. Die Umhüllung sollte also entweder zumindest teilweise elastische oder zumindest plastische Eigenschaften aufweisen, um auf eine auftretende Stoßbelastung durch elastische oder plastische Verformung zu reagieren und nicht zu zerbrechen. Die Umhüllung sollte einen Schmelzbereich (Erstarrungsbereich) in einem solchen Temperaturbereich aufweisen, bei dem die zu umhüllenden Partikel keiner zu hohen thermischen Belastung ausgesetzt werden. Andererseits muß der Schmelzbereich jedoch ausreichend hoch sein, um bei zumindest leicht erhöhter Temperatur noch einen wirksamen Schutz für die eingeschlossenen Partikel zu bieten.

Es hat sich als vorteilhaft erwiesen, wenn die Umhüllung keinen scharf definierten Schmelzpunkt zeigt, wie er üblicherweise bei reinen, kristallinen Substanzen auftritt, sondern einen unter Umständen mehrere Grad Celsius umfassenden Schmelzbereich aufweist.

Die Umhüllung weist vorzugsweise einen Schmelzbereich auf, der zwischen etwa 45°C und etwa 75°C, besonders bevorzugt zwischen etwa 50°C und etwa 60°C liegt. Das heißt im vorliegenden Fall, daß der Schmelzbereich innerhalb des angegebenen Temperaturintervalls auftritt und bezeichnet nicht die Breite des Schmelzbereichs.

Vorzugsweise beträgt die Breite des Schmelzbereichs wenigstens 1°C, vorzugsweise etwa 2 bis etwa 3°C.

Die oben genannten Eigenschaften werden in der Regel von sogenannten Wachsen erfüllt. Unter "Wachsen" wird eine Reihe natürlicher oder künstlich gewonnener Stoffe verstanden, die in der Regel über 40°C ohne Zersetzung schmelzen und schon wenig oberhalb des Schmelzpunktes verhältnismäßig niedrigviskos und nicht fadenziehend sind. Sie weisen eine stark temperaturabhängige Konsistenz und Löslichkeit auf.

Nach ihrer Herkunft teilt man die Wachse in drei Gruppen ein, die natürlichen Wachse, chemisch modifizierte Wachse und die synthetischen Wachse.

Zu den natürlichen Wachsen zählen beispielsweise pflanzliche Wachse wie Candelillawachs, Carnaubawachs, Japanwachs, Espartograswachs, Korkwachs, Guarumawachs, Reiskeimölwachs, Zuckerrohrwachs, Ouricurywachs, oder Montanwachs, tierische Wachse wie Bienenwachs, Schellackwachs, Walrat, Lanolin (Wollwachs), oder Bürzelfett, Mineralwachse wie Ceresin oder Ozokerit (Erdwachs), oder petrochemische Wachse wie Petrolatum, Paraffinwachse oder Mikrowachse.

Zu den chemisch modifizierten Wachsen zählen beispielsweise Hartwachse wie Montanesterwachse, Sassolwachse oder hydrierte Jojobawachse.

Unter synthetischen Wachsen werden in der Regel Polyalkylenwachse oder Polyalkylenglycolwachse verstanden.

Ebenfalls zu den Wachsen im Rahmen der vorliegenden Erfindung werden beispielsweise die sogenannten Wachsalkohole gerechnet. Wachsalkohole sind höhermolekulare, wasserunlösliche Fettalkohole mit mehr als 28 bis 40 Kohlenstoffatomen. Die Wachsalkohole kommen beispielsweise in Form von Wachsestern höhermolekularer Fettsäuren (Wachssäuren) als Hauptbestandteil vieler natürlicher Wachse vor. Beispiele für Wachsalkohole sind Lignocerylalkohol (1-Tetracosanol) oder Melissylalkohol. Die Umhüllung der erfindungsgemäß umhüllten Feststoffpartikel kann gegebenenfalls auch Wollwachsalkohole enthalten, worunter man Triterpen- und Steroidalkohole, beispielsweise Lanolin, versteht. Ebenfalls zumindest anteilig als Bestandteil der Umhüllung einsetzbar sind im Rahmen der vorliegenden Erfindung Fettsäureglycerinester oder Fettsäurealkanolamide aber gegebenenfalls auch wasserunlösliche oder nur wenig wasserlösliche Polyalkylenglycolverbindungen.

Bevorzugt enthält die beim erfindungsgemäßen Verfahren verwendete Umhüllung im überwiegenden Anteil Paraffinwachs. Das heißt, daß wenigstens 50 Gew.-% der Umhüllung, vorzugsweise mehr, aus Paraffinwachs bestehen. Besonders geeignet sind Paraffinwachsgehalte in der Umhüllung von etwa 60 Gew.-%, etwa 70 Gew.-% oder etwa 80 Gew.-%, wobei noch höhere Anteile von beispielsweise mehr als 90 Gew.-% besonders bevorzugt sind. In einer besonderen Ausführungsform der Erfindung besteht die Umhüllung ausschließlich aus Paraffinwachs.

Paraffinwachse weisen gegenüber den anderen genannten, natürlichen Wachsen im Rahmen der vorliegenden Erfindung den Vorteil auf, daß in einer alkalischen Reinigungsmittelumgebung keine Hydrolyse der Wachse stattfindet (wie sie beispielsweise bei den Wachsestern zu erwarten ist), da Paraffinwachs keine hydrolisierbaren Gruppen enthält.

Paraffinwachse bestehen hauptsächlich aus Alkanen, sowie niedrigen Anteilen an Iso- und Cycloalkanen. Das erfindungsgemäß einzusetzende Paraffin weist bevorzugt im wesentlichen keine Bestandteile mit einem Schmelzpunkt von mehr als 70°C, besonders bevorzugt von mehr als 60°C auf. Anteile hochschmelzender Alkane im Paraffin können bei Unterschreitung dieser Schmelztemperatur in der Reinigungsmittelflotte nicht erwünschte Wachsrückstände auf den zu reinigenden Oberflächen oder dem zu reinigenden Gut hinterlassen. Solche Wachsrückstände führen in der Regel zu einem unschönen Aussehen der gereinigten Oberfläche und sollten daher vermieden werden.

Die erfindungsgemäße Umhüllung enthält bevorzugt mindestens ein Paraffinwachs mit einem Schmelzpunkt von etwa 57°C bis etwa 60°C.

Vorzugsweise ist der Gehalt des eingesetzten Paraffinwachses an bei Umgebungstemperatur (in der Regel etwa 10 bis etwa 30°C) festen Alkanen, Isoalkanen und Cycloalkanen möglichst hoch. Je mehr feste Wachsbestandteile in einem Wachs bei Raumtemperatur vorhanden sind, desto brauchbarer ist es im Rahmen der vorliegenden Erfindung. Mit zunehmenden Anteil an festen Wachsbestandteilen steigt die Belastbarkeit der Umhüllung gegenüber Stößen oder Reibung an anderen Oberflächen an, was zu einem länger anhaltenden Schutz der umhüllten Feststoffpartikel führt. Hohe Anteile an Ölen oder flüssigen Wachsbestandteilen können zu einer Schwächung der Umhüllung führen, wodurch Poren geöffnet werden und die umhüllten Feststoffpartikel den Eingangs genannten Umgebungseinflüssen ausgesetzt werden.

Bei außergewöhnlich niedrigen Temperaturen, beispielsweise bei Temperaturen unter 0°C, kann die Umhüllung bei Stoßbelastung oder Reibung zerbrechen. Um die Stabilität bei solch niedrigen Temperaturen zu verbessern, können der Umhüllung gegebenenfalls Additive zugemischt werden. Geeignete Additive müssen sich vollständig mit dem geschmolzenen Wachs vermischen lassen, dürfen den Schmelzbereich der Umhüllung nicht signifikant ändern, müssen die Elastizität der Umhüllung bei tiefen Temperaturen verbessern, dürfen die Durchlässigkeit der Umhüllung gegenüber Wasser oder Feuchtigkeit im allgemeinen nicht erhöhen und dürfen die Viskosität der Schmelze des Umhüllungsmaterials nicht soweit erhöhen, daß eine Verarbeitung erschwert oder gar unmöglich wird. Geeignet Additive, welche die Sprödigkeit einer im wesentlichen aus Paraffin bestehenden Umhüllung bei tiefen Temperaturen herabsetzen, sind beispielsweise EVA-Copolymere, hydrierte Harzsäuremethylester, Polyethylen oder Copolymere aus Ethylacrylat und 2-Ethylhexylacrylat.

Die Umhüllung kann neben Paraffin als Hauptbestandteil noch eine oder mehrere der oben genannten Wachse oder wachsartigen Substanzen enthalten. Grundsätzlich sollte das die Umhüllung bildende Gemisch so beschaffen sein, daß die Umhüllung wenigstens weitgehend wasserunlöslich ist. Die Löslichkeit in Wasser sollte bei einer Temperatur von etwa 30°C etwa 10 mg/l nicht übersteigen und vorzugsweise unterhalb 5 mg/l liegen.

In jedem Fall sollte die Umhüllung jedoch eine möglichst geringe Wasserlöslichkeit, auch in Wasser mit erhöhter Temperatur, aufweisen, um eine temperaturunabhängige Freisetzung der umhüllten Feststoffpartikel möglichst weitgehend zu vermeiden.

Das Umhüllungsmaterial kann in variierenden Mengen, bezogen auf die fertigen, umhüllten Partikel, eingesetzt werden. Üblicherweise macht das Umhüllungsmittel 20 bis 70 Gew.-%, vorzugsweise 30 bis 60 Gew.-% und insbesondere 40 bis 50 Gew.-% des Gewichts der umhüllten Partikel aus.

Durch das erfindungsgemäße Verfahren können erstmals auch solche Stoffe einem Schmelzcoating unterzogen werden, die bei den Temperaturen, in denen das Umhüllungsmaterial erweicht und flüssig ist, ebenfalls als fließfähige bzw. flüssige Substanzen vorliegen. Der Hersteller von umhüllten Komponenten für Wasch- und Reinigungsmittel ist damit beispielsweise bei Bleichmitteln und Bleichaktivatoren, Enzymformulierungen oder anderen Wirksubstanzen nicht mehr darauf angewiesen, feste, hochschmelzende Stoffe einzusetzen, sondern kann auch flüssige Aktivsubstanzen bzw. solche Aktivsubstanzen, die bei der Erweichungstemperatur des Umhüllungsmaterials flüssig sind, einsetzen und umhüllen.

Besondere Vorteile bringt das erfindungsgemäße Verfahren, da mit ihm auch niedrigschmelzende Tenside, insbesondere nichtionische Tenside, problemlos umhüllt und damit löseverzögert werden können. Dies ist insbesondere für das maschinelle Geschirrspülen von Vorteil, da auf diese Weise Geschirrspülmittel bereitgestellt werden können, die im Hauptspülgang ihre Reinigungsleistung entfalten und das umhüllte Tensid erst im Klarspülgang freisetzen, was bislang nahezu unmöglich war. Die Anwesenheit von Tensiden im Klarspülgang eines maschinellen Geschirrspülverfahrens wirkt sich positiv auf den Glanz und die Verringerung von Kalkablagerungen aus.

In besonders bevorzugten Ausführungsformen der vorliegenden Erfindung dient das erfindungsgemäße Verfahren zur Umhüllung von nichtionischen Tensiden, insbesondere nichtionischen Tensiden aus der Gruppe der alkoxylierten Alkohole. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung **JP 58/217598** beschrieben sind oder die vorzugsweise nach dem in der internationalen Patentanmeldung **WO-A-90/13533** beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (I), 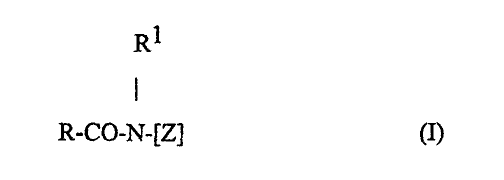 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zukkers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (II), 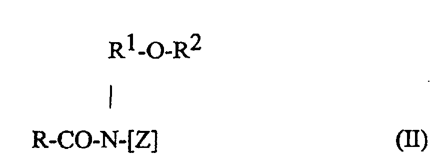 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder Propxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise nach der Lehre der internationalen Anmeldung **WO-A-95/07331** durch Umsetzung mit Fettsäuremethylestern in Gegenwart eines Alkoxids als Katalysator in die gewünschten Polyhydroxyfettsäureamide überführt werden.

Neben den reinen nichtionischen Tensiden können selbstverständelich auch andere Stoffe aus der Gruppe der ionischen Tenside, beispielsweise der Anion- oder Kationtenside, mit Hilfe des erfindungsgemäßen Verfahrens umhüllt werden. Dies ist bei den Vertretern aus den entsprechenden Substanzklassen der Fall, die bei der Erweichungstemperatur des Umhüllungsmittels flüssig sind und sich mit herkömmlichen Methoden nicht coaten lassen.

Selbstverständlich sind auch andere Stoffe mit Hilfe des erfindungsgemäßen Verfahrens umhüllbar. Neben den Tensiden kommen hier beispielsweise die bereits genannten bei der Erweichungstemperatur des Umhüllungsmaterials fließfähigen bzw. flüssigen Bleichmittel, Bleichaktivatoren, Enzymgemische oder Schauminhibitoren in Betracht.

Ein weiterer Vorteil des erfindungsgemäßen Verfahrens besteht darin, daß auch compoundierte Rohstoffe umhüllt werden können, bei denen flüssige Stoffe auf Trägermaterialien aufgebracht wurden. Bislang führte die Schmelzbeschichtung solcher Stoffe zu einer Umhüllung des Trägermaterials und zur Freisetzung der auf das Trägermaterial aufgebrachten Stoffe, so daß das flüssige Umhüllungsmaterial quasi als unerwünschtes Trennmedium wirkte. Mit dem erfindungsgemäßen Verfahren werden diese Probleme umgangen: Es ist problemlos möglich, mit flüssigen Inhaltsstoffen imprägnierte Trägermaterialien zu umhüllen, ohne daß die flüssige Aktivsubstanz separiert.

Überraschenderweise gelingt mit dem erfindungsgemäßen Verfahrens sogar die stabile Einbettung wäßriger Lösungen. Hierdurch ermöglicht das erfindungsgemäße Verfahren eine große Vielfalt von Formulierungsmöglichkeiten, da die Freisetzung solcherart eingebetteter wäßriger Lösung ab einer bestimmten Temperatur die sofortige Verfügbarkeit des gelösten Wirkstoffes in der Wasch- und Reinigungslösung bedeutet, während umhüllte Feststoffpartikel sich erst noch lösen müssen, was zu einer Zeitverzögerung führt.

Auch das zu umhüllende Material kann in variierenden Mengen, bezogen auf die ferkigen, umhüllten Partikel, eingesetzt werden. Üblicherweise machen die zu umhüllenden Stoffe 5 bis 50 Gew.-%, vorzugsweise 10 bis 45 Gew.-% und insbesondere 20 bis 40 Gew.-% des Gewichts der umhüllten Partikel aus.

Erfindungswesentlich für das beschriebene Verfahren ist der Einsatz spezieller Emulgatoren, die die Durchführung des Verfahrens erst ermöglichen. Es hat sich gezeigt, daß bei weitem nicht alle Emulgatoren für das erfindungsgemäße Verfahren geeignet sind. Erfindungsgemäß einsetzbar sind Emulgatoren aus der Gruppe der Fettalkohole, Fettsäuren, Polyglycerinester und der Polyoxyalkylensiloxane.

Unter Fettalkoholen werden im Rahmen der vorliegenden Erfindung die aus nativen Fetten bzw. Ölen über die entsprechenden Fettsäuren (siehe unten) erhältlichen Alkohole mit 6 bis 22 Kohlenstoffatomen verstanden. Diese Alkohole können je nach der Herkunft des Fetts bzw. Öls, aus dem sie gewonnen werden, in der Alkylkette substituiert oder stellenweise ungesättigt sein.

Im erfindungsgemäßen Verfahren werden als Emulgator(en) üblicherweise C₆₋₂₂-Fettalkohole, vorzugsweise C₈₋₂₂-Fettalkohole und insbesondere C₁₂₋₁₈-Fettalkohole unter besonderer Bevorzugung der C₁₆₋₁₈-Fettalkohole, eingesetzt.

Als Emulgatoren können auch sämtliche aus pflanzlichen oder tierischen Ölen und Fetten gewonnenen Fettsäuren verwendet werden. Je nach Gehalt des Trägermaterials an Fettsäure und fettsaurem Salz kann als Fettsäure dabei durchaus auch eine bei Raumtemperatur nicht-feste, d.h. pastöse bis flüssige, Fettsäure eingesetzt werden. Aus anwendungstechnischer Sicht sind allerdings bei Raumtemperatur feste Fettsäuren gegenüber anderen Fettsäuren deutlich bevorzugt.

Die Fettsäuren können unabhängig von ihrem Aggregatzustand gesättigt oder ein- bis mehrfach ungesättigt sein. Auch bei den ungesättigten Fettsäuren sind die bei Raumtemperatur festen Spezies gegenüber den flüssigen bzw. pastösen bevorzugt. Selbstverständlich können nicht nur "reine" Fettsäuren eingesetzt werden, sondern auch die bei der Spaltung aus Fetten und Ölen gewonnenen technischen Fettsäuregemische, wobei diese Gemische aus ökonomischer Sicht wiederum deutlich bevorzugt sind.

So lassen sich als Emulgatoren im rahmen der vorliegenden Erfindung beispielsweise einzelne Spezies oder Gemische folgender Säuren einsetzen: Caprylsäure, Pelargonsäure, Caprinsäure, Laurinsäure, Myristinsäure, Palmitinsäure, Stearinsäure, Octadecan-12-ol-säure, Arachinsäure, Behensäure, Lignocerinsäure, Cerotinsäure, Melissinsäure, 10-Undecensäure, Petroselinsäure, Petroselaidinsäure, Ölsäure, Elaidinsäure, Ricinolsäure, Linolaidinsäure, α- und β-Eläosterainsäure, Gadoleinsäure Erucasäure, Brassidinsäure. Selbstverständlich sind auch die Fettsäuren mit ungerader Anzahl von C-Atomen einsetzbar, beispielsweise Undecansäure, Tridecansäure, Pentadecansäure, Heptadecansäure, Nonadecansäure, Heneicosansäure, Tricosansäure, Pentacosansäure, Heptacosansäure.

In bevorzugten Verfahren werden als Emulgator(en) C₆₋₂₂-Fettsäuren, vorzugsweise C₈₋₂₂-Fettsäuren und insbesondere C₁₂₋₁₈-Fettsäuren unter besonderer Bevorzugung der C₁₆₋₁₈-Fettsäuren, eingesetzt werden.

Besonders bevorzugte Emulgatoren sind im Rahmen der vorliegenden Erfindung Polyglycerinester, insbesondere Ester von Fettsäuren mit Polyglycerinen. Diese bevorzugten Polyglycerinester lassen sich durch die allgemeine Formel III beschreiben 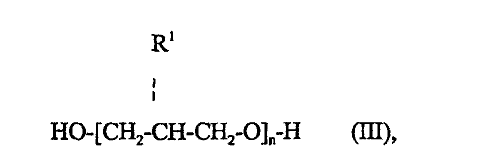 in der R¹ in jeder Glycerineinheit unabhängig voneinander für H oder einen Fettacylrest mit 8 bis 22 Kohlenstoffatomen, vorzugsweise mit 12 bis 18 Kohlenstoffatomen, und n für eine Zahl zwischen 2 und 15, vorzugsweise zwischen 3 und 10, steht.

Diese Polyglycerinester sind insbesondere mit den Polymerisationsgraden n = 2, 3, 4, 6 und 10 bekannt und kommerziell verfügbar. Da Stoffe der genannten Art auch in kosmetischen Formulierungen weite Verbreitung finden, sind etliche dieser Substanzen auch in der INCI-Nomenklatur klassifiziert (CTFA International Cosmetic Ingredient Dictionary and Handbook, 5^{th} Edition, The Cosmetic, Toiletry and Fragrance Association, Washington, 1997). Dieses kosmetische Standardwerk beinhaltet beispielsweise Informationen zu den Stichworten POLYGLYCERYL-3-BEESWAX, POLYGLYCERYL-3-CETYL ETHER, POLYGLYCERYL-4-COCOATE, POLYGLYCERYL-10-DECALINOLEATE, POLYGLYCERYL-10-DECAOLEATE, POLYGLYCERYL-10-DECASTEARATE, POLYGLYCERYL-2-DIISOSTEARATE, POLYGLYCERYL-3-DIISOSTEARATE, POLYGLYCERYL-10-DIISOSTEARATE, POLYGLYCERYL-2-DIOLEATE, POLYGLYCERYL-3-DIOLEATE, POLYGLYCERYL-6-DIOLEATE, POLYGLYCERYL-10-DIOLEATE, POLYGLYCERYL-3-DISTEARATE, POLYGLYCERYL-6-DISTEARATE, POLYGLYCERYL-10-DISTEARATE, POLYGLYCERYL-10-HEPTAOLEATE, POLYGYLCERYL-12-HYDROXYSTEARATE, POLYGLYCERYL-10-HEPTASTEARATE, POLYGLYCERYL-6-HEXAOLEATE, POLYGLYCERYL-2-ISOSTEARATE, POLYGLYCERYL-4-ISOSTEARATE, POLY-GLYCERYL-6-ISOSTEARATE, POLYGLYCERYL-10-LAURATE, POLY-LYCERYLMETHACRYLATE, POLYGLYCERYL-10-MYRISTATE, POLYGLYCERYL-2-OLEATE, POLYGLYCERYL-3-OLEATE, POLYGLYCERYL-4-OLEATE, POLYGLYCERYL-6-OLEATE, POLYGLYCERYL-8-OLEATE, POLYGLYCERYL-10-OLEATE, POLYGLYCERYL-6-PENTAOLEATE, POLYGLYCERYL-10-PENTAOLEATE, POLYGLYCERYL-6-PENTASTEARATE, POLYGLYCERYL-10-PENTASTEARATE, POLYGLYCERYL-2-SESQUI-IOSOSTEARATE, POLYGLYCERYL-2-SESQUIOLEATE, POLYGLYCERYL-2-STEARATE, POLYGLYCERYL-3-STEARATE, POLYGLYCERYL-4-STEARATE, POLYGLYCERYL-8-STEARATE, POLYGLYCERYL-10-STEARATE, POLY-GLYCERYL-2-TETRAISOSTEARATE, POLYGLYCERYL-10-TETRAOLEATE, POLYGLYCERYL-2-TETRASTEARATE, POLYGLYCERYL-2-TRIISOSTEARATE, POLYGLYCERYL-10-TRIOLEATE, POLYGLYCERYL-6-TRISTEARATE. Die kommerziell erhältlichen Produkte unterschiedlicher Hersteller, die im genannten Werk unter den vorstehend genannten Stichwörtern klassifiziert sind, lassen sich im erfindungsgemäßen Verfahren vorteilhaft als Emulgatoren einsetzen.

Eine weitere Gruppe von Emulgatoren, die im erfindungsgemäßen Verfahren Verwendung finden können, sind substituierte Silicone, die mit Ethylen- bzw. Propylenoxid umgesetzte Seitenketten tragen. Solche Polyoxyalkylensiloxane können durch die allgemeine Formel IV beschrieben werden 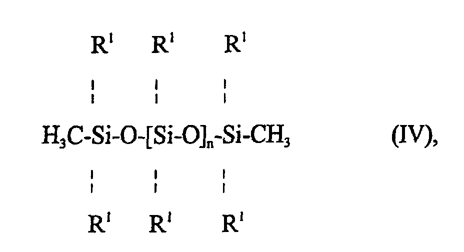 in der jeder Rest R¹ unabhängig voneinander für -CH₃ oder eine Polyoxyethylen- bzw. -propylengruppe -[CH(R²)-CH₂-O]ₓH-Gruppe, R² für -H oder -CH₃, x für eine Zahl zwischen 1 und 100, vorzugsweise zwischen 2 und 20 und insbesondere unter 10, steht und n den Polymerisationsgrad des Silikons angibt.

Optional können die genannten Polyoxyalkylensiloxane auch an den freien OH-Gruppen der Polxoxyethylen- bzw. Polyoxypropylen-Seitenketten verethert oder verestert werden. Das unveretherte und unveresterte Polymer aus Dimethylsiloxan mit Polyoxyethylen und/oder Polyoxypropylen wird in der INCI-Nomenklatur als DIMETHICONE COPOLYOL bezeichnet und ist unter den Handeldnamen Abil® B (Goldschmidt), Alkasil® (Rhöne-Poulenc), Silwet® (Union Carbide) oder Belsil® DMC 6031 kommerziell verfügbar.

Das mit Essigsäure veresterte DIMETHICONE COPOLYOL ACETATE (beispielsweise Belsil® DMC 6032, -33 und -35, Wacker) und der DIMETHICONE COPOLYOL BUTYL ETHER (bsp KF352A, Shin Etsu) sind im Rahmen des erfindungsgemäßen Verfahrens ebenfalls als Emulgatoren einsetzbar.

Bei den Emulgatoren gilt wie bereits bei den Umhüllungsmaterialien und den zu umhüllenden Substanzen, daß sie über einen breit variierenden Bereich eingesetzt werden können. Üblicherweise machen Emulgatoren der genannten Art 1 bis 25 Gew.-%, vorzugsweise 2 bis 20 Gew.-% uns insbesondere 5 bis 10 Gew.-% des Gewichts der umhüllten Partikel aus.

Bei der Durchführung des erfindungsgemäßen Verfahrens gelangt man zu einer Dispersion die mindestens jeweils einen Inhaltsstoff aus den drei vorstehend genannten Gruppen enthält Sofern es gewünscht ist, können weitere Stoffe zu dieser Dispersion hinzugegeben werden bevorzugt werden jedoch nur Umhüllungsmaterial, zu umhüllendes Material und Emulgator zu der Dispersion verarbeitet.

Die Weiterverarbeitung der aufgeschmolzenen Dispersion kann auf die unterschiedlichste Art erfolgen. So ist es beispielsweise möglich, Wasch- und Reinigungsmittelformkörper mit vorgefertigten Mulden herzustellen und die erfindungsgemäß hergestellte Dispersion in diese Mulden einzugießen und dort erstarren zu lassen. Bei dieser Vorgehensweise kann es vorteilhaft sein, die Dispersion deutlich über die Erstarrungstemperatur des Umhüllungsmaterials zu erhitzen und dann in die Mulden zu gießen. Da bei der Abkühlung in diesem Falle eine gewisse Zeit eine flüssige Phase vorliegt, penetriert die Dispersion in gewissem Umfang in die Porositäten im Randbereich der Formkörpermulde und erreicht dort beim Erstarren eine hohe Haftfestigkeit des eingegossenen Kerns, ohne daß Haftvermittler zugegeben werden müssen oder ein Tempern erforderlich ist. Wasch- und Reinigungsmittelformkörper, die einen Bereich enthalten, der mit einer erfindungsgemäßen Dispersion ausgegossen wurde, sind ebenfalls ein Gegenstand der vorliegenden Erfindung. Denkbare Ausführungsformen sind neben der genannten Muldentablette auch Formen wie Ring/Kern-Formkörper oder Kern/Mantel-Formkörper.

Es ist aber auch möglich, die Dispersion auf eine Temperatur abzukühlen, die in etwa im plastischen Erstarrungsbereich der Schmelze liegt. Unter einem plastischen Erstarrungsbereich wird ein Bereich verstanden, bei dem die Schmelze zum einen eine ausreichend hohe Viskosität aufweist um die darin dispergierten Partikel in einer stabilen Dispersion zu halten, zum anderen noch genügend Plastizität und Fließfähigkeit aufweist um, ohne zu brechen oder zu reißen, leicht verformbar und scherbar zu sein.

Dabei kann die Temperatur innerhalb des plastischen Erstarrungsbereichs des Umhüllungsmaterials so variiert werden, daß beispielsweise eine nahezu flüssige, auf jeden Fall aber noch fließfähige Masse erhalten wird bis hin zu nicht mehr fließfähigen Massen, die lediglich noch unter äußerer Krafteinwirkung eine gewisse plastische Verformbarkeit zeigen. Zwischen diesen beiden Erscheinungsformen zeigt die Masse aus Umhüllung und umhüllten Partikeln ein "pastöses" Verhalten.

Im Anschluß an das Abkühlen kann dieses Gemisch aus Partikeln und Umhüllungsmasse einer Granulierung unterzogen werden. Hierzu bieten sich in der Regel alle gängigen Granulierungsverfahren an. Das Granulierungsverfahren wird vorteilhafterweise so gewählt, daß die Granulate den geplanten Einsatz der umhüllten Partikel ohne weitere Bearbeitungsstufe erlauben. Für den im Rahmen der vorliegenden Erfindung bevorzugten Einsatz der umhüllten Partikel in Reinigungsmitteln, werden die Granulate dabei auf eine Teilchengröße von höchstens bis zu etwa 2 mm, bevorzugt auf einen darunterliegenden Wert, beispielsweise 1,5 mm oder 1 mm, granuliert. Für bestimmte Anwendungen können auch noch geringere Teilchendurchmesser für die Granulate angestrebt werden. Bevorzugte Teilchendurchmesser für die Granulate liegen daher im Bereich von etwa einem Millimeter oder etwas darunter, beispielsweise in einem Bereich von etwa 0,5 mm bis 1 mm.

In einer besonders bevorzugten Ausführungsform wird die plastisch erstarrte Masse aus umhüllten Partikeln und Umhüllungsmaterial einem Siebgranulierungsverfahren unterzogen. Bevorzugte Siebe weisen dabei eine Maschenweiten im Rahmen der oben angegebenen maximalen Teilchendurchmesser für das Granulat von bis zu höchstens etwa 2 mm auf.

Gegenstand der Erfindung sind damit auch umhüllte Partikel, erhältlich, indem zu umhüllende Stoffe, die bei der Erweichungstemperatur des Umhüllungsmittels flüssig sind, in der Schmelze eines bei Raumtemperatur festen, weitgehend wasserunlöslichen Stoffes (Umhüllung), der einen plastischen Erstarrungsbereich aufweist, unter Zusatz eines oder mehrerer Emulgatoren aus der Gruppe der Fettalkohole, Fettsäuren, Polyglycerinester und der Polyoxyalkylensiloxane dispergiert werden, die Dispersion abgekühlt und bei einer Temperatur, die im plastischen Erstarrungsbereich der Umhüllung liegt, granuliert wird, wobei die Teilchendurchmesser des Granulats im Bereich von 0,2 bis 2,0 mm, vorzugsweise von 0,6 bis 1,6 mm und insbesonder von 0,8 bis 1,2 mm liegen.

Die erfindungsgemäßen umhüllten Partikel zeichnen sich dadurch aus, daß sie in Wasser bei einer Temperatur von bis zu 6°C unter dem Einsetzen des Schmelzbereichs der Umhüllung nach 10 Minuten weniger als 30 Gew.-% der umhüllten Substanz freisetzen. Der Begriff "freisetzen" bezieht sich dabei auf alle Vorgänge, die zum Nachweis der Aktivsubstanz im Wasser führen, insbesondere auf die Auflösung der Aktivsubstanz im Wasser.

In Fällen, in denen ein besonders empfindliches Material eingebettet werden soll, beispielsweise ein besonders wasserempfindliches Material, können im Anschluß an die Umhüllung des Materials durch Schmelzeinbettung noch ein oder mehrere weitere Umhüllungsschritte folgen. Dies können beispielsweise weitere Schmelzeinbettungsschritte sein, wobei die Einbettungstemperatur unterhalb des Schmelzbereichs der zuerst aufgebrachten Umhüllung liegen sollte. Es kann sich bei den weiteren Umhüllungsschritten jedoch genausogut um Coating-Verfahren handeln, bei dem die nach Schmelzeinbettung und Granulierung vorliegenden umhüllten Feststoffpartikel einzeln mit einer oder mehreren weiteren Umhüllungen versehen werden.

Es kann beispielsweise vorteilhaft sein, wenn die umhüllten Partikel im Anschluß an die Granulierung mit mindestens einer zweiten Umhüllung aus einem Cellulosederivat oder einem Gemisch aus zwei oder mehr Cellulosederivaten umhüllt werden. Besonders geeignet ist hierzu die Methylhydroxyethylcellulose (Tylose® MH 50, Henkel, Düsseldorf). Gegebenenfalls kann auf die mindestens eine zweite Umhüllung noch mindestens eine weitere, beispielsweise eine dritte, Umhüllung aufgetragen werden. Vorteilhafte Ergebnisse lassen sich erzielen, wenn beispielsweise als dritte Umhüllung eine weitere Paraffinschicht aufgetragen wird, deren Schmelzbereich unterhalb des Schmelzbereichs der ersten Umhüllung liegt, beispielsweise bei etwa 28 bis etwa 30°C.

Die erfindungsgemäßen Granulate können in beliebigen Reinigungsmitteln, beispielsweise in Waschmitteln, in Reinigungsmitteln für harte Oberflächen, in maschinellen Geschirrspülmitteln oder in Handgeschirrspülmitteln eingesetzt werden. Die Reinigungsmittel können dabei als Feststoffe, beispielsweise als Pulver oder als Granulate, vorliegen, die erfindungsgemäßen umhüllten Partikel können jedoch auch in flüssigen Reinigungsmitteln eingesetzt werden, die sowohl wasserhaltig als auch wasserfrei sein können.

Gegenstand der Erfindung ist damit auch die Verwendung der erfindungsgemäßen umhüllten Partikel, in Reinigungsmitteln, insbesondere in Waschmitteln, Reinigungsmitteln für harte Oberflächen, maschinellen Geschirrspülmitteln oder Handgeschirrspülmitteln.

### Beispiele:

Durch gemeinsames Aufschmelzen unter stetigem Rühren der genannten Bestandteile bei 65°C wurden die Dispersionen E1 bis E3 und V1 bis V4 hergestellt, deren Zusammensetzungen in Tabelle 1 angegeben ist.

**Tabelle 1:**

| Zusammensetzung [Gew.-%] | | | | | | | |
|---|---|---|---|---|---|---|---|
| | **E1** | **E2** | **E3** | **V1** | **V2** | **V3** | **V4** |
| Paraffin 57-60°C | 60,0 | 60,0 | 60,0 | 60,0 | 60,0 | 60,0 | 60,0 |
| Poly Tergent SLF-18B-45* | 33,3 | 33,3 | 33,3 | 33,3 | 33,3 | 33,3 | 40,0 |
| Polyglycerin-12-hydroxystearat | 6,7 | - | - | - | - | - | - |
| Triglycerindiisostearat | - | 6,7 | - | - | - | - | - |
| Dimethicone Copolyol | - | - | 6,7 | - | - | - | - |
| Sorbitansesquioleat | - | - | - | 6,7 | - | - | - |
| Glycerinmonolaurat | - | - | - | - | 6,7 | - | - |
| PEG-30 Cetylstearylether | - | - | - | - | - | 6,7 | - |

| | | | | | | | |
|---|---|---|---|---|---|---|---|
| *: Alkoholalkoxylat der Firma Olin Chemicals, Erweichungspunkt 25-45°C | | | | | | | |

Während die erfindungsgemäßen Dispersionen E1 bis E3 beim Ausgießen erstarren und das nichtionische Tensid stabil umschließen, trennen sich die Vergleichsbeispiele V1 bis V3 beim Abkühlen und liefern eine feste Paraffinschicht, auf der eine schmierige Mischung aus nichtionischem Tensid und Emulgator liegt. Ohne die Verwendung von Emulgator (V4) liegen selbst bei der Temperatur von 65°C zwei flüssige Phasen nebeneinander vor, die sich nicht miteinander mischen.

## Patentansprüche

1. Verfahren zur Herstellung umhüllter Feststoffpartikel, bei dem die zu umhüllenden Stoffe in der Schmelze eines bei Raumtemperatur festen, weitgehend wasserunlöslichen Stoffes (Umhüllung), der einen plastischen Erstarrungsbereich aufweist, dispergiert werden, die Dispersion abgekühlt, und gegebenenfalls weiterverarbeitet wird, **dadurch gekennzeichnet, daß** die zu umhüllenden Stoffe bei der Erweichungstemperatur des Umhüllungsmittels flüssig sind und der Schmelze ein oder mehrere Emulgatoren aus der Gruppe der Fettalkohole, Fettsäuren, Polyglycerinester und der Polyoxyalkylensiloxane zugegeben werden.

2. Verfahren nach Anspruch 1, **dadurch gekennzeichnet, daß** die Umhüllung einen Schmelzbereich von 45°C bis 75°C aufweist.

3. Verfahren nach einem der vorstehenden Ansprüche, **dadurch gekennzeichnet, daß** die Umhüllung mindestens ein Paraffinwachs mit einem Schmelzbereich von 57°C bis 60°C enthält.

4. Verfahren nach einem der vorstehenden Ansprüche, **dadurch gekennzeichnet, daß** das Umhüllungsmittel 20 bis 70 Gew.-%, vorzugsweise 30 bis 60 Gew.-% und insbesondere 40 bis 50 Gew.-% des Gewichts der umhüllten Partikel ausmacht.

5. Verfahren nach einem der vorstehenden Ansprüche, **dadurch gekennzeichnet, daß** die zu umhüllenden Partikel aus der Gruppe der nichtionischen Tenside, insbesondere der alkoxylierten Alkohole ausgewählt sind.

6. Verfahren nach einem der vorstehenden Ansprüche, **dadurch gekennzeichnet, daß** die zu umhüllenden Stoffe 5 bis 50 Gew.-%, vorzugsweise 10 bis 45 Gew.-% und insbesondere 20 bis 40 Gew.-% des Gewichts der umhüllten Partikel ausmachen.

7. Verfahren nach einem der vorstehenden Ansprüche, **dadurch gekennzeichnet, daß** als Emulgator(en) C₆₋₂₂-Fettalkohole, vorzugsweise C₈₋₂₂-Fettalkohole und insbesondere C₁₂₋₁₈-Fettalkohole unter besonderer Bevorzugung der C₁₆₋₁₈-Fettalkohole, eingesetzt werden.

8. Verfahren nach einem der vorstehenden Ansprüche, **dadurch gekennzeichnet, daß** als Emulgator(en) C₆₋₂₂-Fettsäuren, vorzugsweise C₈₋₂₂-Fettsäuren und insbesondere C₁₂₋₁₈-Fettsäuren unter besonderer Bevorzugung der C₁₆₋₁₈-Fettsäuren, eingesetzt werden.

9. Verfahren nach einem der vorstehenden Ansprüche, **dadurch gekennzeichnet, daß** als Emulator(en) Polyglycerinester der allgemeinen Formel III eingesetzt werden 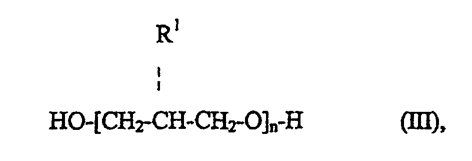 in der R¹ in jeder Glycerineinheit unabhängig voneinander für H oder einen Fettacylrest mit 8 bis 22 Kohlenstoffatomen, vorzugsweise mit 12 bis 18 Kohlenstoffatomen, und n für eine Zahl zwischen 2 und 15, vorzugsweise zwischen 3 und 10, steht.

10. Verfahren nach einem der vorstehenden Ansprüche, **dadurch gekennzeichnet, daß** als Emulator(en) Polyoxyalkylensiloxane der allgemeinen Formel IV eingesetzt werden 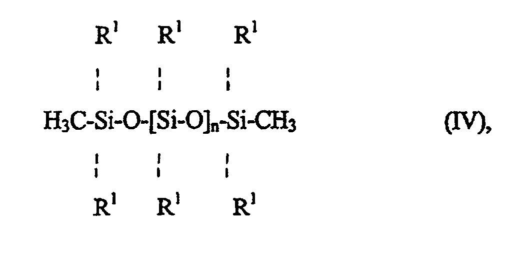 in der jeder Rest R¹ unabhängig voneinander für -CH₃ oder eine Polyoxyethylen- bzw. --propylengruppe -[CH(R²)-CH₂-O]ₓH-Gruppe, R² für -H oder -CH₃, x für eine Zahl zwischen 1 und 100, vorzugsweise zwischen 2 und 20 und insbesondere unter 10, steht und n den Polymerisationsgrad des Silikons angibt.

11. Verfahren nach einem der vorstehenden Ansprüche, **dadurch gekennzeichnet, daß** der Emulgator 1 bis 25 Gew.-%, vorzugsweise 2 bis 20 Gew.-% uns insbesondere 5 bis 10 Gew.-% des Gewichts der umhüllten Partikel ausmacht

12. Verfahren nach einem der vorstehenden Ansprüche, **dadurch gekennzeichnet, daß** die Dispersion bei einer Temperatur, die im plastischen Erstarrungsbereich der Umhüllung liegt, granuliert wird und die Granulierung durch ein Sieb mit einer Maschenweite von höchstens 2 mm erfolgt.

13. Verfahren zur Herstellung befüllter Wasch- und Reinigungsmittelformkörper, **dadurch gekennzeichnet, daß** zu umhüllende Stoffe in der Schmelze eines bei Raumtemperatur festen, weitgehend wasserunlöslichen Stoffes (Umhüllung), der einen plastischen Erstarrungsbereich aufweist, dispergiert werden und die Dispersion in einen vorbereiteten Hohlraum eines Wasch- und Reinigungsmittelformkörpers gegossen und dort erkalten gelassen wird, wobei die zu umhüllenden Stoffe bei der Erweichungstemperatur des Umhüllungsmittels flüssig sind und der Schmelze ein oder mehrere Emulgatoren aus der Gruppe der Fettalkohole, Fettsäuren, Polyglycerinester und der Polyoxyalkylensiloxane zugegeben werden.

14. Umhüllte Partikel, erhältlich, indem zu umhüllende Stoffe, die bei der Erweichungstemperatur des Umhüllungsmittels flüssig sind, in der Schmelze eines bei Raumtemperatur festen, weitgehend wasserunlöslichen Stoffes (Umhüllung), der einen plastischen Erstarrungsbereich aufweist, unter Zusatz eines oder mehrerer Emulgatoren aus der Gruppe der Fettalkohole, Fettsäuren, Polyglycerinester und der Polyoxyalkylensiloxane dispergiert werden, die Dispersion abgekühlt, und gegebenenfalls weiterverarbeitet wird.

15. Umhüllte Partikel, erhältlich, indem zu umhüllende Stoffe, die bei der Erweichungstemperatur des Umhüllungsmittels flüssig sind, in der Schmelze eines bei Raumtemperatur festen, weitgehend wasserunlöslichen Stoffes (Umhüllung), der einen plastischen Erstarrungsbereich aufweist, unter Zusatz eines oder mehrerer Emulgatoren aus der Gruppe der Fettalkohole, Fettsäuren, Polyglycerinester und der Polyoxyalkylensiloxane dispergiert werden, die Dispersion abgekühlt und bei einer Temperatur, die im plastischen Erstarrungsbereich der Umhüllung liegt, granuliert wird, wobei die Teilchendurchmesser des Granulats im Bereich von 0,2 bis 2,0 mm, vorzugsweise von 0,6 bis 1,6 mm und insbesondere von 0,8 bis 1,2 mm liegen.

16. Umhüllte Partikel nach Anspruch 14 oder 15, **dadurch gekennzeichnet, daß** sie in Wasser bei einer Temperatur von bis zu 6°C unterhalb des Beginns des Schmelzbereichs der Umhüllung nach 10 Minuten weniger als 30 Gew.-% der Feststoffpartikel freisetzen.

17. Verwendung umhüllter Partikel nach einem der Ansprüche 14 bis 16, in Reinigungsmitteln, insbesondere in Waschmitteln, Reinigungsmitteln für harte Oberflächen, maschinellen Geschirrspülmitteln oder Handgeschirrspülmitteln.

18. Wasch- oder Reinigungsmittelformkörper, erhältlich nach einem Verfahren gemäß Anspruch 13.

## Claims

1. A process for producing coated particulate solids, in which the substances to be coated are dispersed in the melt of a substantially water-insoluble material (coating) which is solid at room temperature and has a plastic solidification range, the dispersion is cooled, and if desired is processed further, **characterized in that** the substances to be coated are liquid at the softening temperature of the coating material, and one or more emulsifiers from the group consisting of fatty alcohols, fatty acids, polyglycerol esters, and polyoxyalkylenesiloxanes are added to the melt.

2. The process as claimed in claim 1, **characterized in that** the coating has a melting range of 45°C to 75°C.

3. The process as claimed in one of the above claims, **characterized in that** the coating comprises at least one paraffin wax having a melting range of 57°C to 60°C.

4. The process as claimed in one of the above claims, **characterized in that** the coating material accounts for from 20 to 70% by weight, preferably from 30 to 60% by weight, and in particular from 40 to 50% by weight, of the weight of the coated particles.

5. The process as claimed in one of the above claims, **characterized in that** the particles to be coated are selected from the group of the nonionic surfactants, in particular the alkoxylated alcohols.

6. The process as claimed in one of the above claims, **characterized in that** the substances to be coated account for from 5 to 50% by weight, preferably from 10 to 45% by weight, and in particular from 20 to 40% by weight, of the weight of the coated particles.

7. The process as claimed in one of the above claims, **characterized in that** emulsifier(s) used comprise C₆₋₂₂ fatty alcohols, preferably C₈₋₂₂ fatty alcohols, and in particular C₁₂₋₁₈ fatty alcohols, with particular preference C₁₆₋₁₈ fatty alcohols.

8. The process as claimed in one of the above claims, **characterized in that** emulsifier(s) used comprise C₆₋₂₂ fatty acids, preferably C₈₋₂₂ fatty acids, and especially C₁₂₋₁₈ fatty acids, with particular reference C₁₆₋₁₈ fatty acids.

9. The process as claimed in one of the above claims, **characterized in that** emulsifier(s) used comprise polyglycerol esters of the general formula III 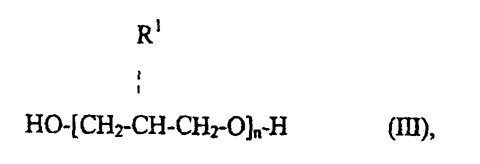 where R¹ in each glycerol unit independently of one another is H or a fatty acyl radical having 8 to 22 carbon atoms, preferably having 12 to 18 carbon atoms, and n is a number between 2 and 15, preferably between 3 and 10.

10. The process as claimed in one of the above claims, **characterized in that** emulsifier(s) used comprise polyoxyalkylenesiloxanes of the formula IV 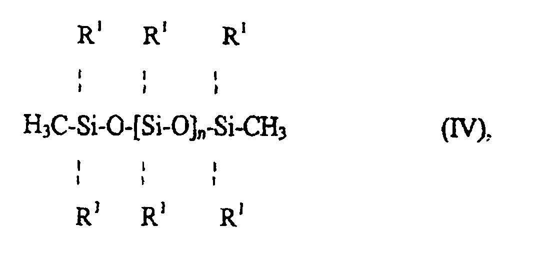 in which each radical R¹ independently of the others is -CH₃ or a polyoxyethylene or polyoxypropylene group -[CH(R²)-CH₂-O]ₓH group, R² is -H or -CH₃, x is a number between 1 and 100, preferably between 2 and 10, and in particular below 10, and n indicates the degree of polymerization of the silicone.

11. The process as claimed in one of the above claims, **characterized in that** the emulsifier accounts for from 1 to 25% by weight, preferably from 2 to 20% by weight, and in particular from 5 to 10% by weight, of the weight of the coated particles.

12. The process as claimed in one of the above claims, **characterized in that** the dispersion is granulated at a temperature which lies within the plastic solidifcation range of the coating and granulation takes place through a sieve having a mesh size of not more than 2 mm.

13. A process for producing filled laundry detergents and cleaning-product tablets, **characterized in that** substances to be coated are dispersed in the melt of a substantially water-insoluble substance (coating) which is solid at room temperature and has a plastic solidification range and the dispersion is cast into a prepared cavity of a laundry detergent and cleaning-product tablet and left to cool therein, the substances to be coated being liquid at the softening temperature of the coating material, and one or more emulsifiers from the group consisting of fatty alcohols, fatty acids, polyglycerol esters, and polyoxyalkylenesiloxanes being added to the melt.

14. Coated particles obtainable by dispersing substances to be coated, which are liquid at the softening temperature of the coating material, in the melt of a substantially water-insoluble substance (coating) which is solid at room temperature and has a plastic solidification range, with the addition of one or more emulsifiers from the group consisting of fatty alcohols, fatty acids, polyglycerol esters, and polyoxyalkylenesiloxanes, cooling the dispersion, and subjecting it to further processing if desired.

15. Coated particles obtainable by dispersing the substances to be coated, which are liquid at the softening temperature of the coating material, in the melt of a substantially water-insoluble substance (coating) which is solid at room temperature and has a plastic solidification range, with the addition of one or more emulsifiers from the group consisting of fatty alcohols, fatty acids, polyglycerol esters, and polyoxyalkylenesiloxanes, cooling the dispersion, and granulating it at a temperature which lies within the plastic solidification range of the coating, the particle diameters of the granules being in the range from 0.2 to 2.0 mm, preferably from 0.6 to 1.6 mm, and in particular from 0.8 to 1.2 mm.

16. Coated particles as claimed in claim 14 or 15, **characterized in that** in water at a temperature of up to 6°C below the beginning of the melting range of the coating they release less than 30% by weight of the particulate solids after 10 minutes.

17. The use of coated particles as claimed in one of claims 14 to 16 in cleaning products, especially in laundry detergents, hard surface cleaners, machine dishwashing detergents, or hand dishwashing detergents.

18. A laundry detergent or cleaning-product tablet, obtainable by a process as claimed in claim 13.

## Revendications

1. Procédé pour la préparation de particules solides enrobées, dans lequel on disperse les substances à enrober dans la masse fondue d'une substance (enrobage) essentiellement insoluble dans l'eau, solide à la température ambiante, qui présente un domaine de solidification plastique, on refroidit la dispersion et le cas échéant on la soumet à un traitement ultérieur, **caractérisé en ce que** les substances à enrober sont liquides à la température de ramollissement de l'agent d'enrobage et on ajoute à la masse fondue un ou plusieurs émulsifiants choisis parmi le groupe comprenant des alcools gras, des acides gras, des esters de polyglycérol et des polyoxyalkylène-siloxanes.

2. Procédé selon la revendication 1, **caractérisé en ce que** l'enrobage présente un domaine de fusion de 45 °C à 75 °C.

3. Procédé selon l'une quelconque des revendications précédentes, **caractérisé en ce que** l'enrobage contient au moins une cire paraffinique possédant un domaine de fusion de 57 °C à 60 °C.

4. Procédé selon l'une quelconque des revendications précédentes, **caractérisé en ce que** l'agent d'enrobage représente de 20 à 70 % en poids, de préférence de 30 à 60 % en poids et en particulier de 40 à 50 % en poids du poids des particules enrobées.

5. Procédé selon l'une quelconque des revendications précédentes, **caractérisé en ce que** les particules à enrober sont choisies parmi le groupe comprenant des agents tensioactifs non ioniques, en particulier des alcools alcoxylés.

6. Procédé selon l'une quelconque des revendications précédentes, **caractérisé en ce que** les substances à enrober représentent de 5 à 50 % en poids, de préférence de 10 à 45 % en poids et en particulier de 20 à 40 % en poids du poids des particules enrobées.

7. Procédé selon l'une quelconque des revendications précédentes, **caractérisé en ce qu'**on met en oeuvre à titre d'émulsifiant(s), des alcools gras en C₆ - C₂₂, de préférence des alcools gras en C₈ - C₂₂, en particulier des alcools gras en C₁₂ - C₁₈, et de manière particulièrement préférée des alcools gras en C₁₆ - C₁₈.

8. Procédé selon l'une quelconque des revendications précédentes, **caractérisé en ce qu'**on met en oeuvre à titre d'émulsifiant(s), des acides gras en C₆ - C₂₂, de préférence des acides gras en C₈ - C₂₂, en particulier des acides gras en C₁₂ - C₁₈, et de manière particulièrement préférée des acides gras en C₁₆ - C₁₈.

9. Procédé selon l'une quelconque des revendications précédentes, **caractérisé en ce qu'**on met en oeuvre, à titre d'émulsifiant(s), des esters de polyglycérol répondant à la formule générale III 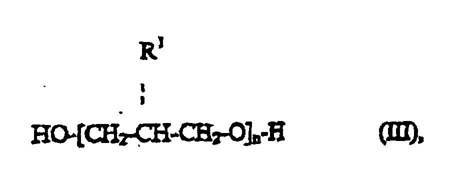 dans laquelle les radicaux R¹ dans chaque unité de glycérol représentent, indépendamment l'un de l'autre, un atome d'hydrogène ou un radical acyle gras contenant de 8 à 22 atomes de carbone, de préférence de 12 à 18 atomes de carbone et n représente un nombre entre 2 et 15, de préférence entre 3 et 10.

10. Procédé selon l'une quelconque des revendications précédentes, **caractérisé en ce qu'**on met en oeuvre, à titre d'émulsifiant(s), des polyoxyalkylène-siloxanes répondant à la formule générale IV 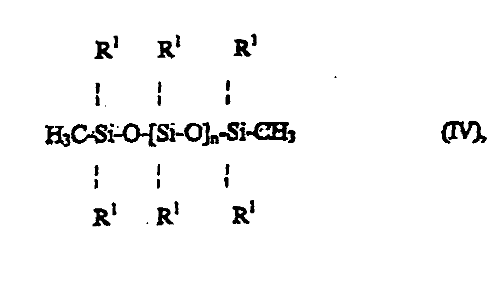 dans laquelle chaque radical R¹ représente, indépendamment l'un de l'autre, un groupe -CH₃, ou un groupe polyoxyéthylène, respectivement un groupe polyoxypropylène, un groupe [CH(R²)-CH₂-O]ₓH, R² représente un atome d'hydrogène ou un groupe -CH₃, x représente un nombre entre 1 et 100, de préférence entre 2 et 20 et en particulier inférieur à 10, et n indique le degré de polymérisation du silicone.

11. Procédé selon l'une quelconque des revendications précédentes, **caractérisé en ce que** l'émulsifiant représente de 1 à 25 % en poids, de préférence de 2 à 20 % en poids et en particulier de 5 à 10 % en poids du poids des particules enrobées.

12. Procédé selon l'une quelconque des revendications précédentes, **caractérisé en ce qu'**on soumet la dispersion à une granulation à une température qui se situe dans le domaine de solidification plastique de l'enrobage, et la granulation a lieu à travers un tamis possédant une largeur maximale de maille de 2 mm.

13. Procédé pour la préparation de corps moulés à titre d'agents de lavage et de nettoyage, contenant des matières de charge, **caractérisé en ce qu'**on disperse des substances à enrober dans la masse fondue d'une substance (enrobage) essentiellement insoluble dans l'eau, solide à la température ambiante, qui présente un domaine de solidification plastique, on verse la dispersion dans l'espace creux préparé d'un corps moulé à titre d'agent de lavage et de nettoyage et on l'y laisse se refroidir, les substances à enrober étant liquides à la température de ramollissement de l'agent d'enrobage et en ajoutant à la masse fondue un ou plusieurs émulsifiants choisis parmi le groupe comprenant des alcools gras, des acides gras, des esters de polyglycérol et des polyoxyalkylène-siloxanes.

14. Particules enrobées que l'on obtient en dispersant des substances à enrober, qui sont liquides à la température de ramollissement de l'agent d'enrobage, dans la masse fondue d'une substance (enrobage) essentiellement insoluble dans l'eau, solide à la température ambiante, qui présente un domaine de solidification plastique, avec addition d'un ou de plusieurs émulsifiants choisis parmi le groupe comprenant des alcools gras, des acides gras, des esters de polyglycérol et des polyoxyalkylène-siloxanes, en refroidissant la dispersion et en la soumettant le cas échéant à un traitement ultérieur.

15. Particules enrobées que l'on obtient en dispersant des substances à enrober, qui sont liquides à la température de ramollissement de l'agent d'enrobage, dans la masse fondue d'une substance (enrobage) essentiellement insoluble dans l'eau, solide à la température ambiante, qui présente un domaine de solidification plastique, avec addition d'un ou de plusieurs émulsifiants choisis parmi le groupe comprenant des alcools gras, des acides gras, des esters de polyglycérol et des polyoxyalkylène-siloxanes, en refroidissant la dispersion et en la soumettant à une granulation à une température qui se situe dans le domaine de solidification plastique de l'enrobage, la granulométrie du produit de granulation se situant dans la plage de 0,2 à 2,0 mm, de préférence de 0,6 à 1,6 mm et en particulier de 0,8 à 1,2 mm.

16. Particules enrobées selon la revendication 14 ou 15, **caractérisées en ce qu'**elles libèrent dans l'eau à une température jusqu'à 6 °C en dessous du début du domaine de fusion de l'enrobage, après 10 minutes, moins de 30 % en poids des particules solides.

17. Utilisation de particules enrobées selon l'une quelconque des revendications 14 à 16, dans des agents de nettoyage, en particulier dans des agents de lavage, dans des agents de nettoyage pour des surfaces dures, dans des détergents pour le lavage mécanique de la vaisselle ou dans des détergents pour le lavage manuel de la vaisselle.

18. Corps moulés à titre d'agents de lavage ou de nettoyage, que l'on obtient conformément à un procédé selon la revendication 13.
